# EUROPÄISCHE PATENTSCHRIFT

(11) **EP 0 799 395 B1**
(45) Veröffentlichungstag und Bekanntmachung des Hinweises auf die Patenterteilung: **26.05.1999**
(21) Anmeldenummer: 95929049.5
(22) Anmeldetag: 01.08.1995
(51) Int. Cl.: F16L 33/207

(54) **BAUSATZ FÜR EINE LEITUNGSVERBINDUNG**
A KIT FOR A LINE CONNECTION
JEU DE PIECES POUR RACCORD DE CONDUITES

(30) Priorität: 31.10.1994 DE 9417513 U
(43) Veröffentlichungstag der Anmeldung: 08.10.1997
(73) Patentinhaber: VERITAS GUMMIWERKE AG, 63571 Gelnhausen (DE)
(72) Erfinder: GREIMER, Joachim, D-63571 Gelnhausen-Höchst (DE)
(74) Vertreter: Grünecker, Kinkeldey, Stockmair & Schwanhäusser Anwaltssozietät
(86) Internationale Anmeldenummer: EP9503067
(87) Internationale Veröffentlichungsnummer: WO9613682

(56) Entgegenhaltungen:
- FR-A- 2 615 266
- US-A- 3 017 203
- US-A- 3 690 703

## Beschreibung

Die vorliegende Erfindung bezieht sich auf einen Bausatz für eine Leitungsverbindung, bestehend aus einem Kunststoffrohr, einer formstabilen Hülse, die in das Verbindungsende des Kunststoffrohrs fest einsetzbar ist, einem Schlauch, der unmittelbar auf die Hülse aufsteckbar ist, und einem Klemmteil, durch das zumindest im Bereich der Verbindungsstelle eine radiale Kraft aufbringbar ist, wobei die Hülse einen Verbindungsbereich aufweist und der Verbindungsbereich Profilierungen aufweist, die im zusammengesteckten Zustand in die Innenwandung des Kunststoffrohres abdichtend eingreift.

Derartige Leitungsverbindungen werden im Stand der Technik schon seit längerem eingesetzt. Bei den bekannten Bausätzen wird eine formstabile Hülse, bevorzugt eine über ihre ganze Länge in das Verbindungsende eines im wesentlichen starren PA-Rohres eingeschlagen, so daß auf der Verbindungsseite die Stirnflächen von der Metallhülse und dem Rohr im wesentlichen bündig sind. Der im wesentlichen flexible Schlauch ist mit seinem Verbindungsende über den Außenumfang des durch die Metallhülse verstärkten PA-Rohres aufgeschoben. Ein Klemmteil, zum Beispiel in Form einer Schlauchschelle oder einer Preßhülse, preßt den Schlauch auf das in ihn eingeführte Ende des mit der Metallhülse verstärkten Rohres, wobei die formstabile Hülse sicherstellt, daß der Durchströmquerschnitt gewahrt bleibt. Zwar genügt diese Leitungsverbindung geringfügigen Anforderungen, jedoch bestehen bezüglich der Dichtigkeit, insbesondere bei höheren Anforderungen im Kfz-Bereich, einige Probleme. Eine derartige Leitungsverbindung genügt daher nicht den hier gestellten Anforderungen bei höher beanspruchten Verbindungsstellen. Ein weiteres Problem der bekannten Leitungsverbindung besteht darin, daß aufgrund ihres Aufbaus sich das Herstellungsverfahren für die Leitungsverbindung nur mit relativ großem Aufwand automatisieren läßt.

Die FR-A-2 615 266 beschreibt eine Schlauchverbindungseinheit, bei der zwei Schlauchenden mittels einer Metallhülse miteinander verbunden werden. Die Metallhülse weist jeweils Wülste an ihren Endbereichen und einen mittig angeordneten Ringsteg auf. Der Ringsteg befindet sich zwischen den Stirnseitenenden der Schläuche. Ein Schrumpfschlauch wird mittels bekannter Technik um die Verbindungsstelle herum angeordnet. Durch eine Verformung des Schrumpfschlauches im Bereich der Hülse und am Ringsteg wird dieser sicher, insbesondere durch Formschluß, um die Verbindungsstelle herum befestigt und sorgt für eine gleichmäßige Klemmkraft.

Aus der US-A-3,690,703 ist eine Schlauchverbindung von zwei Schläuchen mit unterschiedlichem Durchmesser bekannt. Die Verbindung der beiden Schläuche und erfolgt mittels einer Metallhülse, die ebenfalls zwei Durchmesserbereiche aufweist, die an einer Stufe aneinandergrenzen. Auf die Hülse wird eine Scheibe aufgeschoben, die mit der Stufe zur Anlage kommt. Anschließend werden die Schlauchenden der Schläuche auf die Hülse aufgeschoben und eine Hülse über die Verbindungsstelle geschoben. Die Hülse wird dann mit den Schläuchen im Bereich der Hülse verpreßt, so daß auch die Scheibe von ihr umschlossen ist.

Der vorliegenden Erfindung liegt daher die Aufgabe zugrunde, einen Bausatz für eine Leitungsverbindung der Eingangs genannten Art bereitzustellen, der ein besseres Dichtverhalten aufweist und bezüglich des Herstellungsverfahrens für die Leitungsverbindung leichter automatisierbar ist.

Erfindungsgemäß wird diese Aufgabe dadurch gelöst, daß das Kunststoffrohr starr ist und daß die Hülse zusammen mit dem Schlauch und dem Klemmteil vorkonfektioniert ist, so daß der Verbindungsbereich an dem Schlauchende hervorsteht und die Hülse zusammen mit dem Schlauch das starre Kunststoffrohr einschlagbar ist. Demnach liegen sich die Stirnflächen von dem Schlauch und dem Rohr im wesentlichen gegenüber, wobei die Nahtstelle dazwischen durch die Hülse im Inneren des Rohrs und des Schlauches abgedeckt wird. Hierdurch wird die Dichtigkeit der Leitungsverbindung enorm gesteigert.

Zwar sind Steckansätze mit Profilierungen zum Aufstecken von flexiblen Schläuchen allgemein bekannt. Jedoch wurde eine erfindungsgemäße Kombination der Bausatzteile im Stand der Technik nicht nahegelegt. Aus dieser Kombination ergeben sich unter anderem die Vorteile, daß sich sowohl die Verbindung der Hülse mit dem Schlauchende als auch die Verbindung der Hülse mit dem Rohr in getrennten voll- bzw. halbautomatisierbaren Vorgängen durchführen läßt. Obwohl sich gegenüber der bekannten Leitungsverbindung die Dichtigkeit enorm steigert, wird die Anzahl der Bausatzteile nicht erhöht. Ein entscheidender wirtschaftlicher Faktor besteht darin, daß es nicht länger nötig ist, den Schlauch bzw. das Kunststoffrohr sich überschneiden zu lassen, so daß bei jeder Leitungsverbindung bei gleicher Länge im Vergleich mit einer bekannten Leitungsverbindung Material eingespart werden kann. Dieser Faktor ist insbesondere bei den zu erwartenden Stückzahlen, insbesondere im Kfz-Bereich, von sehr großer Bedeutung.

Erfindungsgemäß besteht der Vorteil darin, daß das eigentliche Anschlußelement durch die Hülse gebildet ist, wodurch aufgrund der Festigkeit der Hülse sich das Anschlußelement leichter standardisieren läßt und dadurch den Anforderungen nach günstigen Logistikkonzepten genügt. Beim Stand der Technik sind das Einschlagen der Hülse und das Aufstecken des Schlauchendes Verfahrensschritte, die bei der endgültigen Herstellung der Leitungsverbindung durchgeführt werden müssen. Bei der Bereitstellung eines vorkonfektionierten Schlauches mit Hülse beschränkt sich der eigentliche Verbindungsvorgang auf das Einschlagen des aus dem Schlauchende hervorstehenden Verbindungsbereichs der Hülse in das Kunststoffrohr. Es ist leicht zu ersehen, daß dieser Vorgang wesentlich einfacher zu automatisieren ist. Insbesondere wird es möglich sein, die standardisierten Einzelteile des Bausatzes in der Zulieferindustrie abzusetzen.

Eine günstige Ausgestaltung der Profilierung besteht darin, sie in Art eines genormten Tannenbaumprofils auszubilden. Das Tannenbaumprofil ist ein im Stand der Technik gängiges Profil und erfüllt somit höchste Standardisierungsansprüche. Das gleiche gilt auch für eine andere Variante der vorliegenden Erfindung bei der die Profilierung in der Art eines welligen SAE-Profils ausgebildet ist. Beide obengenannten Profilierungsarten ermöglichen ein begünstigtes Einführen der Hülse in Steckrichtung, jedoch ein verstärktes abdichtendes Eingreifen in das Kunststoffrohr bei Kräften, die entgegen der Steckrichtung wirken.

Als Werkstoff für das Kunststoffrohr kann insbesondere Polyamid eingesetzt werden, was sich in solchen Anwendungsfällen bestens bewährt hat.

Zum Bereitstellen einer entsprechenden Klemmkraft kann das Klemmteil in der Art ausgeführt werden, daß außen auf der Verbindungsstelle eine die radiale Kraft aufbringende Preßhülse angeordnet ist. Die Preßhülse preßt zumindest den Schlauch auf die Hülse und/oder das Kunststoffrohr auf den Verbindungsbereich der Hülse. In diesem Zusammenhang ist insbesondere die Dreibundpreßhülse zu nennen, die im wesentlichen zwei Preßstellen aufweist, um jeweils entsprechend den Schlauch und das Kunststoffrohr mit der Hülse zu verpressen. Die Preßhülse stellt eine einfache und leicht standardisierbare Ausführungsform des Klemmteils dar.

Eine weitere einfache und leicht zu standardisierende Variante des Klemmteils besteht darin, daß dieses durch eine Schlauchschelle gebildet wird, die zum Verbinden von Schlauch und Hülse am Außenumfang des Schlauchs angeordnet ist. Eine solche Schlauchschelle könnte natürlich auch zur Verbindung des Rohres und der Hülse verwendet werden. Die Verwendung von insbesondere genormten Schlauchschellen erhöht weiterhin den Standardisierungsgrad des Bausatzes.

Zum besseren Schutz der Verbindungsstelle gegen äußere Einflüsse kann diese mit einem Kunststoff umspritzt sein. Hierdurch läßt sich auch ein sehr ansprechendes Design der Leitungsverbindung erreichen.

Damit die Hülse im Schlauch ebenfalls einen besseren Halt aufweist, kann der im Schlauch steckende Teil der Hülse auch Profilierungen aufweisen. Des weiteren kann die Hülse zum Erreichen einer größeren Härte und Formstabilität als das Kunststoffrohr und der Schlauch aus Metall oder einem glas- oder kohlefaserverstärktem Kunststoff hergestellt sein.

Im folgenden werden Ausführungsformen der vorliegenden Erfindung anhand einer Zeichnung näher erläutert. Es zeigt:
Fig. 1 einen Bausatz für eine Leitungsverbindung gemäß der vorliegenden Erfindung,
Fig. 2 eine Variante eines Klemmteils des erfndungsgemäßen Bausatzes,
Fig. 3 eine in das Schlauchende eingesteckte, standardisierte Hülse im Halbschnitt und
Fig. 4 eine Variante einer Hülse gemäß der vorliegenden Erfindung.

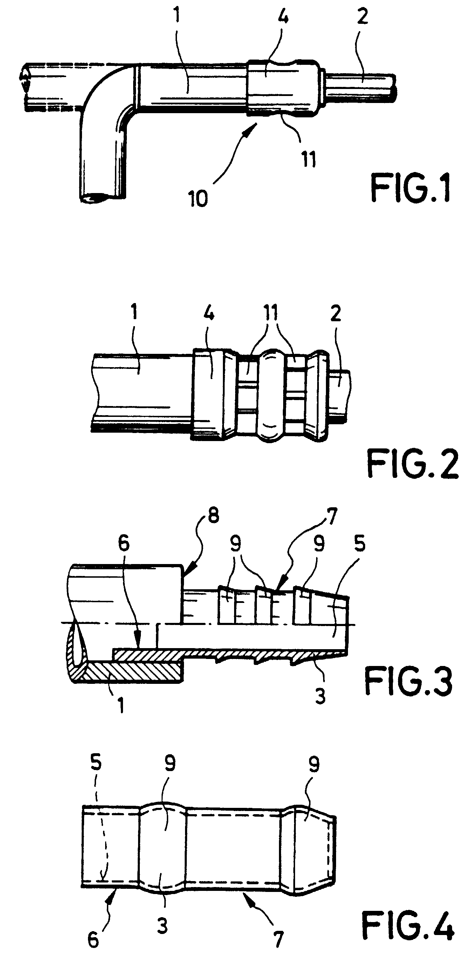

Die in Fig. 1 dargestellte Leitungsverbindung besteht im wesentlichen aus einem flexiblen Gummischlauch 1, der als Krümmer oder Längsschlauch ausgebildet sein kann, einem im wesentlichen stirnseitig daran anschließenden Kunststoffrohr 2 aus Polyamid, einer im Innern des Schlauchs 1 und des Kunststoffrohrs 2 steckenden Metallhülse 3 (siehe Fig. 3) und einem außen aufsitzenden, eine radiale Klemmkraft aufbringenden Klemmteil 4.

Gemäß der Fig. 3 weist die Metallhülse 3 eine durchgehende Bohrung 5 auf und ist mit einem Einsteckbereich 6 unmittelbar in das Innere des Schlauches 1 eingesteckt. Ein Verbindungsbereich 7 der Metallhülse 3 steht an dem Schlauchende 8 axial hervor und weist an seinem Außenumfang Profilierungen 9 in Form eines genormten Tannenbaumprofils auf.

Das Kunststoffrohr 2 sitzt fest mit seiner Innenwand auf dem Verbindungsbereich 7 der Metallhülse 3 auf, so daß die Profilierungen 9 der Metallhülse 3 abdichtend in die Innenwandung des Kunststoffrohrs 2 eingreifen. Das Schlauchende 8 und die entsprechend zugewandte Stirnseite des Kunststoffrohres 2 liegen im wesentlichen aneinander an.

Die Verbindungsstelle 10 ist außen mit einer als Klemmteil 4 ausgebildeten Preßhülse umgeben, die entweder gemäß Fig. 1 eine einzige Preßstelle 11 aufweist, die entsprechend den Schlauch 1 oder das Kunststoffrohr 2 auf die Metallhülse 3 preßt, oder gemäß Fig. 2 mehrere Preßstellen 11 aufweist, die entsprechend den Schlauch 1 und das Kunststoffrohr 2 auf die Metallhülse 3 pressen. In Fig. 2 ist demnach eine auf die Verbindungsstelle 10 aufgeschobene Dreibundpreßhülse dargestellt.

In Fig. 4 ist eine weitere Variante der Metallhülse 3 dargestellt, deren Profilierungen 9 in Form eines welligen SAE-Profils ausgebildet sind. Diese Variante der Metallhülse 3 wird ebenfalls mit ihrem Einsteckbereich 6 in das Innere des Schlauches 1 eingesteckt und mit ihrem Verbindungsbereich 7 in das Innere des Kunststoffrohres 2 eingeschlagen.

Gemäß einer weiteren Ausführungsform kann zusätzlich zur Preßhülse die Verbindungsstelle 10 mit einem Kunststoff umspritzt sein.

Im folgenden wird die Herstellung der Leitungsverbindung unter Verwendung der oben beschriebenen Ausführungsform zusammen mit deren Wirkungsweise näher erläutert.

Der erfindungsgemäße Bausatz läßt sich sehr leicht standardisieren, wodurch sich das Herstellungsverfahren zur Erstellung einer entsprechenden Leitungsverbindung unter Verwendung des erfindungsgemäßen Bausatzes extrem automatisieren läßt. Der Schlauch 1 wird zusammen mit der Metallhülse 3 vorkonfektioniert, indem der Einsteckbereich 6 in einem separaten Vorgang in den Schlauch 1 eingeführt wird. Ein Aufschieben und Verpressen zum Beispiel einer Dreibundpreßhülse gemäß Fig. 2 erfolgt ebenfalls. Diese vorkonfektionierten Bausatzeinzelteile können entsprechend gelagert oder zugeliefert werden, so daß sich günstigere Logistikkonzepte gegenüber dem Stand der Technik realisieren lassen. Bei der Erstellung der eigentlichen Verbindung wird die Metallhülse mit ihrem Verbindungsbereich 7, zusammen mit dem angefügten Schlauch 1 und der eventuell angefügten Preßhülse mit dem Verbindungsende des Kunststoffrohres 2 in Eingriff gebracht. Dabei greifen dann die Profilierungen 9 der Metallhülse 3 in die Innenwandung des Kunststoffrohres abdichtend ein. Anschließend kann zum Beispiel bei Verwendung einer Dreibundhülse gemäß Fig. 2 die Preßstelle 11 zur Verpressung von dem Kunststoffrohr 2 und der Metallhülse 3 erstellt werden. Dieser Verbindungsvorgang läßt sich ebenfalls sehr leicht automatisieren. Zudem genügt eine solche Leitungsverbindung sehr hohen Dichtungsanforderungen, weil die Nahtstelle zwischen dem Schlauch 1 und dem Kunststoffrohr 2 unmittelbar von der in diese beiden Bauteile 1, 2 fest eingesetzten Metallhülse 3 abgedeckt ist.

Ergänzend sei angeführt, daß die Hülse 3 zum Erreichen einer gewünschten hohen Festigkeit und Formstabilität auch aus glas- oder kohlefaserstärktem Kunststoff hergestellt sein kann.

## Patentansprüche

1. Bausatz für eine Leitungsverbindung, bestehend aus einem Kunststoffrohr (2), einer formstabilen Hülse (3), die in das Verbindungsende des Kunststoffrohres (2) fest einsetzbar ist, einem Schlauch (1), der unmittelbar auf die Hülse (3) aufsteckbar ist, und einem Klemmteil (4), durch das zumindest im Bereich der Verbindungsstelle (10) eine radiale Kraft aufbringbar ist, wobei die Hülse (3) einen Verbindungsbereich (7) aufweist und der Verbindungsbereich (7) Profilierungen (9) aufweist, die im zusammengesteckten Zustand in die Innenwandung des Kunststoffrohres (2) abdichtend eingreifen,
**dadurch gekennzeichnet**,
daß das Kunststoffrohr (2) starr ist und daß die Hülse (3) zusammen mit dem Schlauch (1) und dem Klemmteil (4) vorkonfektioniert ist, so daß der Verbindungsbereich (7) an dem Schlauchende (8) hervorsteht und die Hülse (3) zusammen mit dem Schlauch (1) in das starre Kunststoffrohr (2) einschlagbar ist.

2. Bausatz nach Anspruch 1,
**dadurch gekennzeichnet**,
daß die Profilierungen (9) in der Art eines genormten Tannenbaumprofils ausgebildet sind.

3. Bausatz nach Anspruch 1 oder 2,
**dadurch gekennzeichnet**,
daß die Profilierungen (9) in der Art eines welligen SAE-Profils ausgebildet sind.

4. Bausatz nach einem der Ansprüche 1 bis 3,
**dadurch gekennzeichnet**,
daß das Kunststoffrohr (2) aus Polyamid besteht.

5. Bausatz nach einem der Ansprüche 1 bis 4,
**dadurch gekennzeichnet**,
daß eine Preßhülse als Klemmteil (4) vorgesehen ist, durch die zumindest der Schlauch (1) auf die Hülse (3) und/oder das Kunststoffrohr (2) auf den Verbindungsbereich (7) der Hülse (3) preßbar ist.

6. Bausatz nach einem der Ansprüche 1 bis 4,
**dadurch gekennzeichnet**,
daß eine Schlauchschelle zum Verbinden von Schlauch (1) und Hülse (3) am Außenumfang des Schlauchs (1) vorgesehen ist.

7. Bausatz nach einem der Ansprüche 1 bis 6,
**dadurch gekennzeichnet**,
daß die Verbindungsstelle (10) mit einem Kunststoff umspritzbar ist.

8. Bausatz nach einem der Ansprüche 1 bis 7,
**dadurch gekennzeichnet**,
daß der im Schlauch (1) steckende Teil (6) der Hülse (3) Profilierungen aufweist.

9. Bausatz nach einem der Ansprüche 1 bis 8,
**dadurch gekennzeichnet**,
daß die Hülse (3) aus einem Metall oder glas- oder kohlefaserverstärktem Kunststoff hergestellt ist.

10. Verfahren zum Herstellen einer Leitungsverbindung mit einem Bausatz nach einem der Ansprüche 1 bis 9, bestehend aus einem starren Kunststoffrohr (2), einer formstabilen Hülse (3), einem Schlauch (1) und einem Klemmteil (4), bei dem die Hülse (3) zusammen mit dem Schlauch (1) und dem Klemmteil (4) vorkonfektioniert und nachfolgend in das Verbindungsende des Kunststoffrohres (2) eingeschlagen wird, so daß die Profilierungen (9) am Verbindungsbereich (7) der Hülse (3) in die Innenwandung des Kunststoffrohres (2) eingreifen.

## Claims

1. A kit for a line connection comprising a plastic tube (2), a shape-retaining sleeve (3) adapted to be fixedly inserted into the connection end of said plastic tube (2), a hose (1) adapted to be directly attached to said sleeve (3), and a clamping member (4) by means of which a radial force can be applied at least in the area of the location of connection (10), said sleeve (3) being provided with a connection area (7) and said connection area (7) being provided with profiles (9) which sealingly engage the inner wall of said plastic tube (2) in the assembled condition, **characterized in that** the plastic tube (2) is rigid and that the sleeve (3) is prefabricated together with the hose (1) and the clamping member (4) so that the connection area (7) projects beyond the hose end (8) and the sleeve (3) is adapted to be fixedly inserted into the rigid plastic tube (2) together with the hose (1).

2. A kit according to claim 1, **characterized in that** the profiles (9) have the form of a standard pine-tree profile.

3. A kit according to claim 1 or 2, **characterized in that** the profiles (9) have the form of a wavy S.A.E. profile.

4. A kit according to one of the claims 1 to 3, **characterized in that** the plastic tube (2) consists of polyamide.

5. A kit according to one of the claims 1 to 4, **characterized in that** a pressing sleeve is provided as a clamping member (4), said pressing sleeve being adapted to be used for pressing at least the hose (1) onto the sleeve (3) and/or the plastic tube (2) onto the connection area (7) of said sleeve (3).

6. A kit according to one of the claims 1 to 4, **characterized in that** a hose clamp is arranged on the outer circumference of the hose (1) for connecting said hose (1) and said sleeve (3).

7. A kit according to one of the claims 1 to 6, **characterized in that** the location of connection (10) is adapted to be enclosed by a plastic material which can be sprayed therearound.

8. A kit according to one of the claims 1 to 7, **characterized in that** the part (6) of the sleeve (3) inserted in the hose (1) is provided with profiles.

9. A kit according to one of the claims 1 to 8, **characterized in that** the sleeve (3) is made from metal or from a glass fibre- or carbon fibre-reinforced plastic material.

10. A method of producing a line connection by means of a kit according to one of the claims 1 to 9, which consists of a rigid plastic tube (2), a shape-retaining sleeve (3), a hose (1), and a clamping member (4), said method comprising the steps of prefabricating the sleeve (3) together with the hose (1) and the clamping member (4) and inserting it then fixedly into the connection end of the plastic tube (2) so that the profiles (9) on the connection area (7) of the sleeve (3) engage the inner wall of said plastic tube (2).

## Revendications

1. Jeu de pièces pour un raccord de conduites, formé d'un tube en matière plastique (2), d'un manchon indéformable (3) qui peut être fixé dans l'extrémité de liaison du tube en matière plastique (2), d'un tuyau (1) qui peut être enfilé directement sur le manchon (3), et d'un élément de serrage (4) grâce auquel une force radiale peut être appliquée au moins dans la zone du point de liaison (10), étant précisé que le manchon (3) présente une zone de liaison (7) et que la zone de liaison (7) présente des parties profilées (9) qui, en position assemblée, pénètrent de façon étanche dans la paroi intérieure du tube en matière plastique (2),
**caractérisé** en ce que le tube en matière plastique (2) est rigide et en ce que le manchon (3) est préfabriqué avec le tuyau (1) et l'élément de serrage (4), de sorte que la zone de liaison (7) dépasse au niveau de l'extrémité de tuyau (8) et que le manchon (3) est apte à être enfoncé avec le tuyau (1) dans le tube rigide en matière plastique (2).

2. Jeu de pièces selon la revendication 1, **caractérisé** en ce que les parties profilées (9) ont la forme d'un profil en sapin normalisé.

3. Jeu de pièces selon la revendication 1 ou 2, **caractérisé** en ce que les parties profilées (9) ont la forme d'un profil SAE ondulé.

4. Jeu de pièces selon l'une des revendications 1 à 3, **caractérisé** en ce que le tube en matière plastique (2) se compose de polyamide.

5. Jeu de pièces selon l'une des revendications 1 à 4, **caractérisé** en ce qu'il est prévu comme élément de serrage (4) un manchon de pression grâce auquel au moins le tuyau (1) peut être pressé sur le manchon (3) et/ou le tube en matière plastique (2) peut être pressé sur la zone de liaison (7) du manchon (3).

6. Jeu de pièces selon l'une des revendications 1 à 4, **caractérisé** en ce qu'il est prévu sur la circonférence extérieure du tuyau (1) un collier de serrage pour relier le tuyau (1) et le manchon (3).

7. Jeu de pièces selon l'une des revendications 1 à 6, **caractérisé** en ce que le point de liaison (10) peut être recouvert d'une matière plastique par injection.

8. Jeu de pièces selon l'une des revendications 1 à 7, **caractérisé** en ce que la partie (6) du manchon (3) qui est introduite dans le tuyau (1) présente des parties profilées.

9. Jeu de pièces selon l'une des revendications 1 à 8, **caractérisé** en ce que le manchon (3) est fabriqué à partir d'un métal ou d'une matière plastique renforcée par des fibres de verre ou de carbone.

10. Procédé pour fabriquer un raccord de conduites comportant un jeu de pièces selon l'une des revendications 1 à 9, formé d'un tube rigide en matière plastique (2), d'un manchon indéformable (3), d'un tuyau (1) et d'un élément de serrage (4), selon lequel on fabrique préalablement le manchon (3) avec le tuyau (1) et l'élément de serrage (4) et on l'enfonce ensuite dans l'extrémité de liaison du tube en matière plastique (2), de sorte que les parties profilées (9) prévues sur la zone de liaison (7) du manchon (3) pénètrent dans la paroi intérieure du tube en matière plastique (2).
